# EUROPÄISCHE PATENTSCHRIFT

(11) **EP 2 369 728 B1**
(45) Veröffentlichungstag und Bekanntmachung des Hinweises auf die Patenterteilung: **23.05.2018**
(21) Anmeldenummer: 11002344.7
(22) Anmeldetag: 22.03.2011
(51) Int. Cl.: H02M 1/34, H02M 3/335

(54) **Schaltungsanordnung zur aktiven Klemmung eines Eintaktdurchflusswandlers**
Switching assembly for active clamping of a single transistor forward converter
Agencement de commutation pour le serrage actif d'un convertisseur de débit à une mesure

(30) Priorität: 23.03.2010 DE 102010012584
(43) Veröffentlichungstag der Anmeldung: 28.09.2011
(73) Patentinhaber: Airbus Defence and Space GmbH, 82024 Taufkirchen (DE)
(72) Erfinder: Strixner, Erich, 81245 München (DE)
(74) Vertreter: Frenkel, Matthias Alexander

(56) Entgegenhaltungen:
- EP-A2- 1 249 926
- US-A- 5 019 957
- US-A1- 2008 170 419
- US-A1- 2009 268 489

## Beschreibung

Die Erfindung betrifft eine Schaltungsanordnung zur aktiven Klemmung eines Eintakt-Durchflusswandlers, wobei die Schaltungsanordnung elektrisch mit einer Leistungsstufe des Eintakt-Durchflusswandlers gekoppelt ist. Die Leistungsstufe umfasst einen mit einem primären Hauptschalter gekoppelten Leistungsübertrager zur Leistungsübertragung von einer Primärseite des Leistungübertragers auf eine Sekundärseite des Leistungsübertragers. Die Schaltungsanordnung umfasst einen ansteuerbaren und mit der Leistungsstufe gekoppelten Hilfsschalter zur Entmagnetisierung des Leistungsübertragers und einen Ladungsspeicher zur aktiven Unterdrückung transienter Spannungen über dem Hauptschalter.

Eintakt-Durchflusswandler mit herkömmlicher aktiver Klemmung können einen weiten Eingangsspannungsbereich bei niedriger Verlustleistung abdecken. Diese Topologie enthält prinzipbedingte Resonanzen der Leistungsstufe bzw. Leistungsbaugruppe. Schnelle Sprünge der Eingangsspannung des Eintakt-Durchflusswandlers sowie hohe Lastsprünge am Ausgang des Durchflusswandlers sind nur unter hohen Performanceeinschränkungen beherrschbar.

Aus der US 2008/0170419 A1 ist eine Schaltungsanordnung zur aktiven Klemmung eines Eintakt-Durchflusswandlers bekannt. In Fig. 1 dieser Druckschrift ist ein prinzipieller, einfacher Aufbau der aktiven Klemmung dargestellt. Die Leistungsbaugruppe besteht aus einem Hauptschalter 11 und einem Transformator 2. Über diese Komponenten wird Leistung von einer Primärseite der Leistungsbaugruppe auf eine Sekundärseite der Leistungsbaugruppe übertragen. Ein Hilfsschalter 12, welcher einen sog. Klemmkondensator C mit der primären Hauptwicklung des Transformators 2 verbindet, ist während der Aus-Phase des Hauptschalters 11 eingeschaltet. Der Hilfsschalter 12 klemmt die Magnetisierungsenergie zu Beginn der Entmagnetisierung in den Klemmkondensator C und speist die Energie in umgekehrter Richtung zurück in den Transformator 2. Die mit SW3 und SW4 gekennzeichneten Schaltelemente, die mit einer sekundären Induktivität des Transformators 2 gekoppelt sind, richten eine am Ausgang des Transformators 2 entstehende Rechteckspannung gleich. Die rechteckförmige Spannung wird integriert und ein Gleichstrom mit überlagertem Dreieckstrom in einen Siebkondensator gespeist. Die Leistungsbaugruppe mit aktiver Klemmung umfasst weiterhin eine Einheit 4 ("Output Feedback Pulse Unit"), welche die Regelung der Ausgangsspannung Vₒᵤₜ des Durchflusswandlers beinhaltet. Die Einheit 4 steuert einen Pulsweitenmodulator 5 ("Pulse Modulation Unit") an, welcher ein pulsweitenmoduliertes Ansteuersignal für den Haupt- und Hilfsschalter 11 bzw. 12 erzeugt.

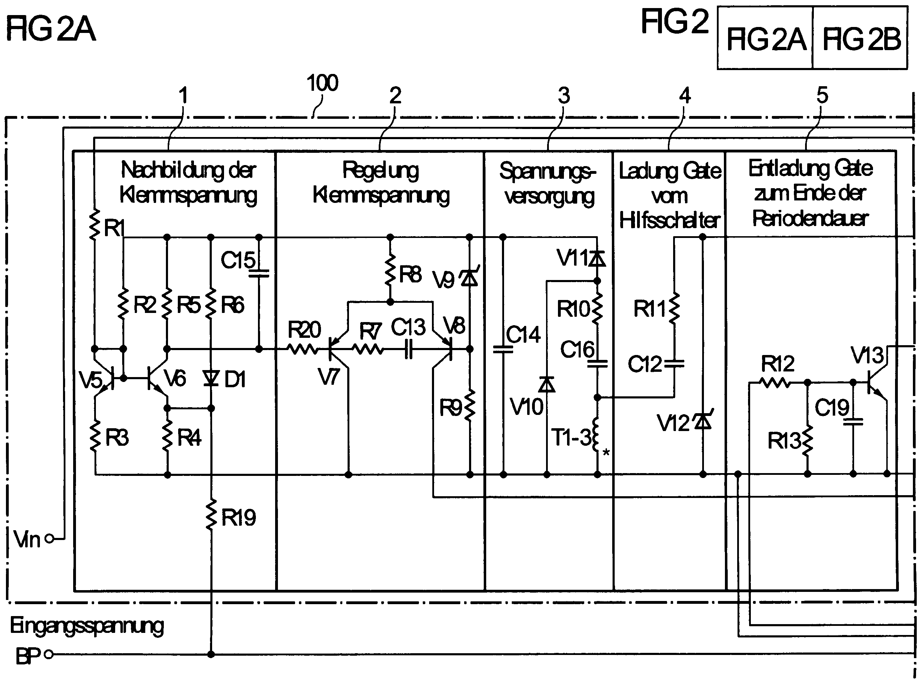

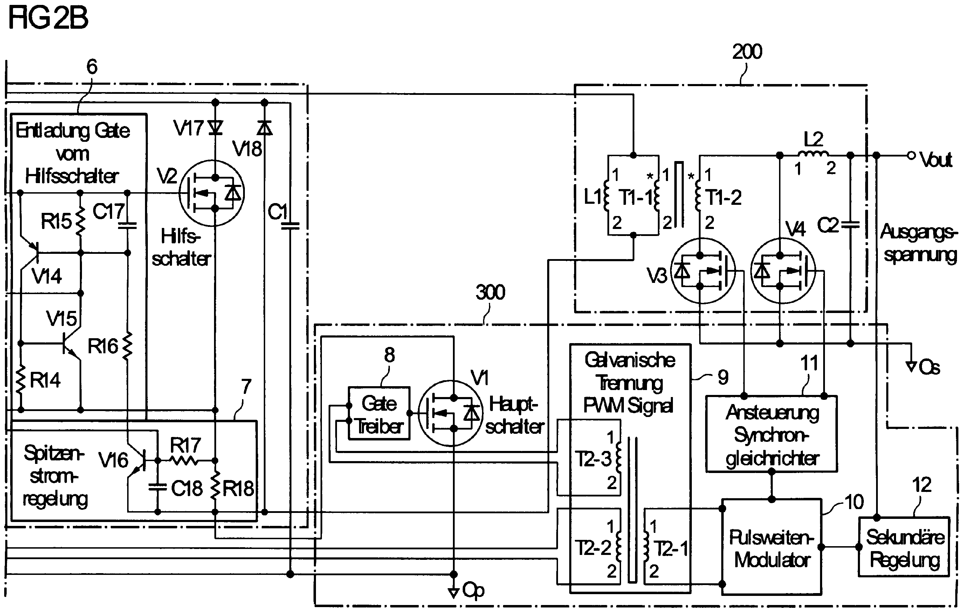

Diese Art der aktiven Klemmung enthält im Leistungspfad eine unbedämpfte oder nur gering bedämpfte Resonanz. Der Hilfsschalter 12 ist immer dann eingeschaltet, wenn der Hauptschalter 11 ausgeschaltet ist. Das damit entstehende Resonanzgebilde besteht aus dem Ladungsspeicher C (sog. Klemmkondensator) und der primären Hauptinduktivität L des Transformators 2. Die Resonanzstelle macht sich im Zeitbereich durch die hohe Vds Spannungsbelastung in Fig. 2, Bezeichner 101 bemerkbar,

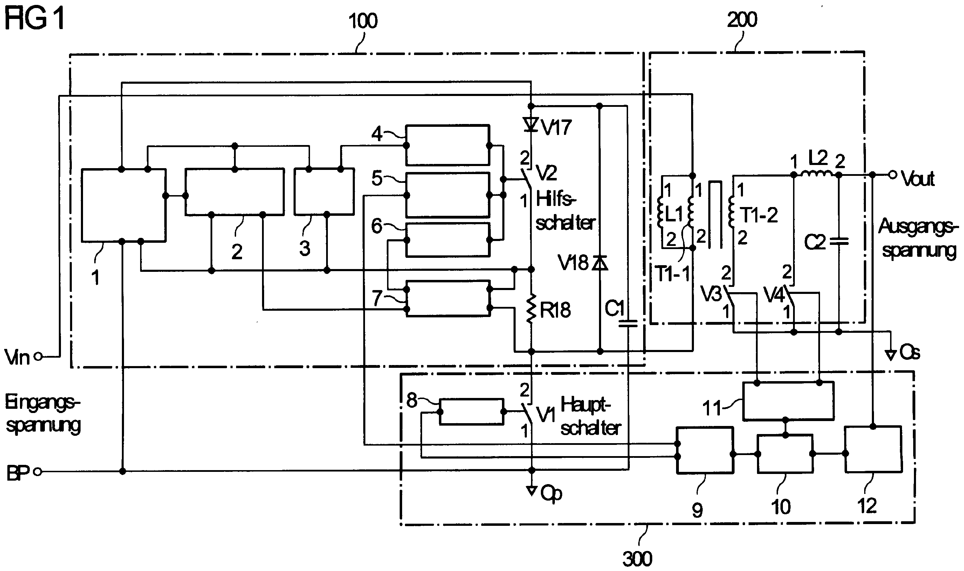

Die an sich geringe Sperrspannung an den sekundären Schaltelementen SW3, SW4 und die niedrigen Verluste im Hauptschalter können somit nicht voll genutzt werden. Die Anregung der unbedämpften Resonanz kann sowohl durch sekundärseitige Lastsprünge als auch durch eine schnelle Änderung der Eingangsspannung der Leistungsbaugruppe erfolgen. Dies kann je nach Dimensionierung zu sehr hohen Spannungsbelastungen im Leistungspfad bis hin zur Zerstörung von Bauteilen führen. Weitere Nachteile sind eine niedrige Regelbandbreite, da die Resonanz bei niedrigen Frequenzen bereits zu einer starken Phasendrehung führt. Geringe Durchgangsdämpfung vom Eingang zum Ausgang und eine geringe Lastsprungfähigkeit sekundärseitig sind die Folge. Diese Nachteile machen die in Fig. 1 dargestellte Topologie nur eingeschränkt einsetzbar.

Die verbesserte und in den Figuren 3 ff. dargestellte Schaltungsanordnung der US 2008/0170419 A1 blendet die Resonanz für sekundärseitige Lastsprünge aus. Das Grundprinzip der Ausblendung beruht auf einer spannungsgesteuerten Stromregelung, welche den Strom durch eine primäre Hauptinduktivität 2 des Transformators T1 während der Endmagnetisierung regelt. Der Hilfsschalter 12 ist hierbei nicht während der kompletten Aus-Phase des Hauptschalters 11 eingeschaltet, sondern wird durch eine Regelelektronik in der Eintastung gesteuert. Die Eintastung des Hilfsschalters 12 wird so geregelt, dass sich die Summenspannung - bestehend aus Eingangsspannung und Entmagnetisierungsspannung des Transformators T1 - auf einen konstanten Wert einstellt.

Das Ersatzschaltbild für die verbesserte aktive Klemmung der US 2008/0170419 A1 besteht aus der Serienschaltung des Klemmkondensators C, der primären Hauptinduktivität 2 des Transformators T1 und aus einer Stromquelle, welche durch die spannungsabhängige Stromregelung gebildet wird. Die hohe Serienimpedanz, die durch die spannungsgesteuerte Stromregelung entsteht, blendet die primäre Hauptinduktivität 2 des Transformators T1 während der Klemmphase aus. Die offene Spannungsschleife sieht hierbei eine hohe Impedanz, welche den Phasenfrequenzgang nicht beeinflussen kann. Die störende Resonanz ist damit nicht mehr vorhanden.

Die Nachbildung der Klemmspannung erfolgt gemäß Bild 4 der US 2008/0170419 A1 über eine Spitzenwertgleichrichtung der Spannung an der Hilfswicklung 61 am Transformator TX1. Gleichrichtung und Glättung der Wicklungsspannung wird mit Dioden D4, D5 und Ladungsspeichern C1, C2 realisiert (mit dem Bezugszeichen 6 als "Peak-to-Peak Detection Unit" gekennzeichnet). An dem Ladungsspeicher C1 bildet sich die transformierte Eingangsspannung (Bulk) und an dem Ladungsspeicher C2 die transformierte Entmagnetisierungsspannung ab. Die Summe der beiden Spannungen, welche sich durch die Serienschaltung der Ladungsspeicher C1 und C2 ergibt, ist unter Vernachlässigung der Gleichrichtung und der Spannungswelligkeit der Spitzenwertgleichrichtung proportional der Klemmspannung an dem Klemmkondensator C3.

Bei jeder Schwankung der Eingangsspannung (Bulk) ändert sich auch die Spannung an den Ladungsspeichern C1 und C2, obwohl deren Summenspannung auf einen konstanten Wert ausgeregelt wird. Da die Kondensatoren mittels D4 und D5 schnell geladen werden können, aber die Entladung des Ladungsspeichers C1 nur über die Widerstände R1, R2 und R3 und die Entladung des Ladungsspeichers C2 nur über den Widerstand R7 erfolgt, ist eine schnelle dynamische Spannungsnachbildung der Eingangsspannung nicht möglich. Daher können schnelle Änderungen der Eingangsspannung im Nanosekunden-Bereich durch die in der US 2008/0170419 A1 gezeigte Schaltungsanordnung nicht ausgeregelt werden. Wenn sich die Eingangsspannung schneller ändert als die fünffache Entladezeitkonstante der Ladungsspeicher C1 und C2, kann die Klemmspannung nicht mehr ausgeregelt werden. Während dieser Zeit kann die Resonanz nicht ausgeblendet werden, was zu einem instabilen Regelkreis führt.

US 5,019,957 A offenbart ein Schaltnetzteil einer Durchflusswandlerart, welches eine Klemmschaltung für eine Schalteinheit des Schaltnetzteils umfasst, welches die gespeicherte Energie im Transformator während jedes Schaltzyklus, ohne dabei Energie zu verlieren, speichert, und den Fluss im Leistungstransformator während jedes Schaltzyklus umkehrt um die Flusskapazität des Leistungstransformators wieder herzustellen.

EP 1 249 926 A2 offenbart eine Klemmvorrichtung und ein Verfahren für elektrische Schaltungen. Das Verfahren umfasst Schalten einer Energieversorgung auf ein Energietransferelement, Regulieren einer Energieversorgung durch Schalten der Energieversorgung auf das Energietransferelement, Klemmen einer Spannung an das Energietransferelement zu einer Klemmspannung und Variieren der Klemmspannung als Antwort auf die Energieversorgung.

US 2009/268489 A1 offenbart einen Sperrwandler mit einem aktiven Dämpfer, der einen Transformator enthält. Der Transformator hat eine Primärwicklung auf einer ersten Seite. Der aktive Dämpfer ist parallel gekoppelt mit zwei Enden der Primärwicklung und hat eine erste Umfangsschaltung, die parallel gekoppelt mit der Primärwicklung ist, eine zweite Umfangsschaltung und eine Nullspannungsschalteinheit. Die zweite Umfangsschaltung wird gesteuert durch die Nullspannungsschalteinheit und ist eingebaut mit der ersten Umfangsschaltung um Doppeldämpfungswege zur Reduktion von Strom zu bilden und Resonanzen zu verhindern, die bei einem einzelnen Umfangskreis und der Sekundärseite des Transformators auftreten können.

Es ist daher Aufgabe der vorliegenden Erfindung, eine Schaltungsanordnung zur aktiven Klemmung eines Eintakt-Durchflusswandlers anzugeben, welche eine Resonanz im Betrieb des Eintakt-Durchflusswandlers unter allen operationellen Bedingungen ausblendet.

Diese Aufgabe wird gelöst durch eine Schaltungsanordnung gemäß den Merkmalen des Patentanspruches 1. Vorteilhafte Ausgestaltungen ergeben sich aus den abhängigen Patentansprüchen.

Die Erfindung schafft eine Schaltungsanordnung zur aktiven Klemmung eines Eintakt-Durchflusswandlers, wobei die Schaltungsanordnung elektrisch mit einer Leistungsstufe bzw. Leistungsbaugruppe des Eintakt-Durchflusswandlers gekoppelt ist. Die Leistungsstufe umfasst einen mit einem primären Hauptschalter gekoppelten Leistungsübertrager zur Leistungsübertragung von einer Primärseite des Leistungsübertragers auf dessen Sekundärseite. Die Schaltungsanordnung umfasst einen ansteuerbaren und mit der Leistungsstufe gekoppelten Hilfsschalter zur Entmagnetisierung des Leistungsübertragers und einen Ladungsspeicher zur aktiven Unterdrückung transienter Spannungen über dem Hauptschalter. Erfindungsgemäß weist der Hilfsschalter im Falle seiner Ansteuerung durch die Schaltungsanordnung keinen Bezug zu einem Bezugspotential der Schaltungsanordnung auf.

Eine erfindungsgemäße Schaltungsanordnung erlaubt die Ausblendung von Resonanzen bei sekundärseitigen Lastsprüngen und primärseitigen schnellen Eingangsspannungsänderungen im Nanosekunden-Bereich. Die Schaltungsanordnung ist in der Lage, die Resonanz der aktiven Klemmung vollständig zu unterdrücken, welche bei hoher dynamischer sekundärer Last als auch bei sich schnell ändernder Eingangsspannung angeregt wird.

Zweckmäßigerweise ist der Ladungsspeicher mit einem Bezugspotentialanschluss der Schaltungsanordnung verbunden, wobei die an dem Ladungsspeicher anliegende Klemmspannung auf einen konstanten Wert, bezogen auf das Bezugspotential (BP), geregelt wird.

Zweckmäßigerweise ist die Klemmspannung des Ladungsspeichers durch die Schaltungsanordnung mit einer Grenzfrequenz oberhalb eines vorgegebenen Schwellwerts nachgebildet. Zur Realisierung der Regelung der Klemmspannung ist gemäß dieser Ausführungsvariante vorgesehen, die Klemmspannung auf eine schwimmende Masse zu beziehen und die Klemmspannung mit einer insbesonderen hohen Grenzfrequenz (ungefähr 1/10 der Schaltfrequenz der Konverters) nachzubilden.

Gemäß einer weiteren Ausgestaltungsvariante ist der Hilfsschalter in Serie mit dem Hauptschalter verschaltet, wobei der Hauptschalter mit dem Bezugspotentialanschluss verbunden und der Hilfsschalter mit der an dem Ladungsspeicher anliegenden Klemmspannung beaufschlagt ist. Auf diese Weise kann der Hilfsschalter im Falle seiner Ansteuerung "schwimmend" ohne Bezug zu einem Bezugspotential der Schaltungsanordnung angesteuert werden.

Zweckmäßigerweise sind der Hauptschalter und der Hilfsschalter steuerbare Halbleiterschaltelemente, insbesondere MOSFETs, vom gleichen Leitfähigkeitstyp. In einer konkreten Ausgestaltung kommen N-Kanal-MOSFETs zum Einsatz.

Gemäß einer weiteren zweckmäßigen Ausgestaltung umfasst die Schaltungsanordnung eine Einheit zur Nachbildung der Klemmspannung, durch die eine gegenüber der Klemmspannung skalierte und gegenüber einer positiven Versorgungsspannung der Schaltungsanordnung referenzierte Nachbildungsspannung erzeugbar ist.

In einer weiteren Ausgestaltung umfasst die Schaltungsanordnung eine Einheit zur Regelung der Klemmspannung, die dazu ausgebildet ist, die Nachbildungsspannung mit einer Referenzspannung zu vergleichen.

Gemäß einer weiteren zweckmäßigen Ausgestaltung umfasst die Schaltungsanordnung eine Einheit zur Bereitstellung einer Versorgungsspannung für die Spannungsversorgung der Einheit zur Nachbildung der Klemmspannung und der Einheit zur Regelung der Klemmspannung. Insbesondere ist die Einheit zur Bereitstellung der Versorgungsspannung mit einem Steueranschluss des Hilfsschalters zu dessen Ansteuerung gekoppelt. Konkret ist dabei vorgesehen, dass über die Einheit zur Bereitstellung der Versorgungsspannung ein Gate-Anschluss des als MOSFET ausgebildeten Hilfsschalters über einen Widerstand und einen Kondensator aufgeladen wird.

Gemäß einer weiteren zweckmäßigen Ausgestaltung umfasst die Schaltungsanordnung eine Einheit zur Spitzenstromregelung, die dazu ausgebildet ist, den Abschaltstrom im Hilfsschalter zu variieren.

Gemäß einer weiteren Ausgestaltung umfasst die Schaltungsanordnung eine Einheit zur Ladung des Steueranschlusses des Hilfsschalters (Ladung Gate vom Hilfsschalter).

In einer weiteren zweckmäßigen Ausgestaltung umfasst die Schaltungsanordnung eine Einheit zur Entladung des Steueranschlusses des Hilfsschalters zum Ende einer Periodendauer (Entladung Gate zum Ende der Periodendauer).

Gemäß einer weiteren zweckmäßigen Ausgestaltung umfasst die Schaltungsanordnung eine Einheit zur Entladung des Steueranschlusses des Hilfsschalters (Entladung Gate vom Hilfsschalter).

Die Erfindung wird nachfolgend näher anhand eines Ausführungsbeispiels in der Zeichnung erläutert. Es zeigen:
- Fig. 1: eine schematische Darstellung einer erfindungsgemäßen Schaltungsanordnung zur aktiven Klemmung eines Eintakt-Durchflusswandlers,
- Fig. 2A, 2B: eine Ausführungsvariante einer erfindungsgemäßen Schaltungsanordnung zur aktiven Klemmung eines Eintakt-Durchflusswandlers, und
- Fig. 3a bis 3h: Diagramme, welche schematisch zur Charakterisierung der Schaltungsanordnung relevante Messgrößen in Bezug auf das in Fig. 2 gezeigte Ausführungsbeispiel illustrieren.

Fig. 1 zeigt eine schematische Darstellung einer erfindungsgemäßen Schaltungsanordnung zur aktiven Klemmung eines Eintakt-Durchflusswandlers.

Der Eintakt-Durchflusswandler mit aktiver Klemmung umfasst in seiner Leistungsstufe 200 einen Hauptschalter V1, durch dessen Ansteuerung Leistung von einer Primärseite eines Leistungsübertragers T1 zu dessen Sekundärseite potentialgetrennt übertragbar wird. Der Leistungsübertrager T1 umfasst eine Wicklung T1-1 auf der Primärseite (primäre Hauptinduktivität) und eine Wicklung auf der Sekundärseite T1-2. Mit der sekundären Wicklung T1-2 ist ein sekundärer Synchrongleichrichter, umfassend Schaltelemente V3 und V4, sowie ein Ausgangsfilter, bestehend aus einer Induktivität L2 und einem Ladungsspeicher C2, verbunden.

Mit der Leistungsstufe oder Leistungsbaugruppe 200 verbunden ist eine Kleinsignalelektronik 300, welche die mit dem Bezugszeichen 8, 9, 10, 11 und 12 gekennzeichneten Funktionsblöcke umfasst. Die Kleinsignalelektronik 300 besteht aus einer sekundären Regelung 12, welche mit einem Ausgang Vₒᵤₜ der Leistungsstufe 200 verbunden ist. Die sekundäre Regelung 12 ist mit einem Pulsweitenmodulator 10 gekoppelt, welcher über eine galvanische Trennung 9 ein pulsmoduliertes Signal an einen Treiberbaustein 8 (Gate-Treiber) liefert. Dieser Treiberbaustein steuert den Hauptschalter V1 an. Die Einheit 9 zur Pulsweitenmodulation ist ferner mit einer Einheit 11 zur Ansteuerung des Synchrongleichrichters 11 gekoppelt. Ausgangsseitig ist die Einheit 11 zur Ansteuerung des Synchrongleichrichters mit jeweiligen Steueranschlüssen der Schaltelemente V3, V4 des Synchrongleichrichters verbunden.

Die Schaltungsanordnung 100 zur aktiven Klemmung des Eintakt-Durchflusswandlers umfasst einen Hilfsschalter V2, der vorzugsweise wie der Hauptschalter V1 als Halbleiterschaltelement in Gestalt eines MOSFETs ausgebildet ist. Vorzugsweise sind Haupt- und Hilfsschalter V1, V2 vom gleichen Leitfähigkeitstyp, z.B. N-Kanal-MOSFETs. Mit dem Hilfsschalter V2 ist eine Diodenanordnung, umfassend die Dioden V17 und V18 verbunden. Die Diode V17 ist seriell mit dem Hilfsschalter V2 und dem Strommesswiderstand R18 verschaltet, parallel dazu liegt V18.

Die Verschaltung des Hilfsschalters V2 ist derart, dass der Hilfsschalter V2 im Falle seiner Ansteuerung durch die Schaltungsanordnung 100 keinen Bezug zu einem Bezugspotential der Schaltungsanordnung 100 aufweist. Das primärseitige Bezugspotential der Schaltungsanordnung wird durch das an einem Bezugspotentialanschluss BP anliegende Potential bereitgestellt. Der Hilfsschalter V2 ist in Serie mit dem Hauptschalter V1 verschaltet, wobei der Hauptschalter V1 mit dem Bezugspotentialanschluss BP verbunden und der Hilfsschalter V2 mit der an dem Ladungsspeicher C1 anliegenden Klemmspannung beaufschlagt ist. Der zwischen dem Bezugspotentialanschluss BP und dem Knotenpunkt der Diodenanordnung V17, V18 verschaltete Ladungsspeicher C1 dient zur aktiven Unterdrückung transienter Spannungen über dem Hauptschalter V1.

Als weitere Komponenten umfasst die Schaltungsanordnung 100, die die Ansteuerelektronik des Durchflusswandlers darstellt, eine Einheit 1 zur Nachbildung einer an einem Ladungsspeicher C1 anliegenden Klemmspannung, eine Einheit 2 zur Regelung der Klemmspannung, eine Spitzenstromregelung 7, welche mit dem Strommesswiderstand R18 gekoppelt ist, eine Einheit 3 zur Bereitstellung einer Versorgungsspannung für die Einheiten 1 und 2 sowie für eine Einheit 4 zur Ladung eines Steueranschlusses des Hilfsschalters V2. Ferner umfasst die Schaltungsanordnung 100 eine Einheit 5 zur Entladung des Steueranschlusses zum Ende einer Periodendauer und eine Einheit 6 zur Entladung des Steueranschlusses vom Hilfsschalter in normalen operationellen Betrieb. Dementsprechend sind die Einheiten 4, 5, 6 mit dem Steueranschluss des Hilfsschalters V2 gekoppelt. Die Einheit 5 zur Entladung des Steueranschlusses zum Ende der Periodendauer erhält ferner über die Einheit 9 ein pulsmoduliertes Ansteuersignal von der Einheit zur galvanischen Trennung des PWM Signals 9.

Die Beschreibung der weiteren Funktionsweise der erfindungsgemäßen Schaltungsanordnung erfolgt nachfolgend unter Bezugnahme auf Fig. 2. Der Hauptschalter V1 wird über die Einheit 9 zur galvanischen Trennung des pulsweitenmodulierten Signals vom Pulsweitenmodulator 10 mit einem begrenzten Tastverhältnis angesteuert. Der Hilfsschalter V2 kann nur während der Aus-Phase des Hauptschalters V1 durchgesteuert werden. Das Einschalten des Hilfsschalters V2 erfolgt hierbei über eine Wicklung T1-3 des Leistungsübertragers T1, wobei die Wicklung T1-3 Bestandteil der Einheit 3 zur Bereitstellung der Spannungsversorgung ist. Ein Abschaltpuls für den Hilfsschalter V2, welcher von der Einheit zur galvanischen Trennung des pulsweitenmodulierten Signals 9 erzeugt wird, begrenzt dessen Einschaltzeit, so dass der Hilfsschalter V2 immer ausgeschaltet ist, bevor der Hauptschalter V1 eingeschaltet wird.

Die Schaltungsanordnung 100 zur Ansteuerung des Hilfsschalters V2 regelt die an dem Ladungsspeicher C1 anliegende Klemmspannung des auf Masse bezogenen Ladungsspeichers (den sog. Klemmkondensator) auf einen konstanten Wert aus. Um eine Regelung der Klemmspannung zu ermöglichen, wird diese, auf das schwimmende Bezugspotential bezogen, mit einer hohen Grenzfrequenz nachgebildet.

Die Einheit 1 zur Nachbildung der Klemmspannung bildet die Spannung in dem Ladungsspeicher C1 mit einem Konvertierungsfaktor an einem Ladungsspeicher C15 ab, wobei der Konvertierungsfaktor über die Größe eines Widerstands R5 einstellbar ist. Die Schaltungsstruktur der Einheit 1 zur Nachbildung der Klemmspannung ist in der Lage, die Klemmspannung an dem Ladungsspeicher C1 ohne Fehler abzubilden, unabhängig wie schnell und wie hoch die Busspannung innerhalb vom ausgelegten Eingangsspannungsbereich an einem Eingangsspannungsanschluss Vᵢₙ springt. Die Nachbildung kann somit Änderungen der Klemmspannung in beiden Richtungen verfolgen.

Die Einheit 1 zur Nachbildung der Klemmspannung besteht aus einem Stromspiegel, der durch die Bipolartransistoren V5, V6 gebildet ist. Widerstände R3 und R4 reduzieren die Paarungsgenauigkeit der Bipolartransistoren V5, V6 und ermöglichen die Summation der Ströme durch die Widerstände R1 und R19. Der Strom durch den Widerstand R1 wird durch den Stromspiegel V5, V6 und die Widerstände R3, R4 in einen Kollektorstrom durch den Bipolartransistor V6 gespiegelt. Der Strom durch R19 summiert sich über den Emitter des Bipolartransistors V6 zu dessen Kollektorstrom hinzu. Der Strom durch R19 hat eine Kurvenform der Schaltfrequenz entsprechend, proportional der Spannung am Hauptschalter V1. Der Strom durch den Widerstand R1 ist proportional zur Differenz aus der Spannung am Ladungsspeicher C1 und der Spannung am Widerstand R1.

Da die Ströme durch die Widerstände R1 und R19 auch Null werden können, sind bei dem Stromspiegel Arbeitspunkt stabilisierende Maßnahmen vorgesehen. Der Widerstand R2 stellt den Ruhestrom durch den Bipolartransistor V5 ein. Dieser Fehler wird durch den Strom durch den Widerstand R6 subtrahiert. Die Diode D1, die in Serie zum Widerstand R6 geschaltet ist reduziert den Subtraktionsfehler weitestgehend und ist in den meisten Fällen entbehrlich.

Am Widerstand R5 bildet sich idealisiert die Klemmspannung des Ladungsspeichers C1 ab. Diese ist skaliert um den Faktor R5/R1 für R1 = R19. Geringfügige dynamische Fehler werden durch den Ladungsspeicher C15 gefiltert. Die Spannung ist referenziert gegen die positive Versorgungsspannung im schwimmenden Kompartement.

Die Einheit 2 zur Regelung der Klemmspannung vergleicht die durch die Einheit 1 nachgebildete Klemmspannung mit einer Referenzspannung, welche durch die Diode V9 bereitgestellt wird. Eine eventuell auftretende Fehlerspannung wird von einem Differenzverstärker, der durch die Bipolartransistoren V7 und V8 gebildet ist, in einen proportionalen Strom durch den Kollektor des Bipolartransistors V8 umgesetzt. Da sich beim Differenzverstärker die Basis-Emitter-Dioden der Bipolartransistoren V7, V8 weitestgehend kompensieren, wird eine sehr genaue Spannungsregelung ermöglicht. Der Widerstand R20, der Widerstand R7 sowie der Ladungsspeicher C13 gegenkoppeln den Differenzverstärker, um einen stabilen Phasen-Frequenzgang der Regelung zu erreichen.

Die Einheit 3 zur Bereitstellung der Spannungsversorgung hat zwei Aufgaben. Sie stellt die Spannungsversorgung für die Einheit 1 für die Nachbildung der Klemmspannung und für die Einheit 2 für die Regelung der Klemmspannung zur Verfügung. Zusätzlich wird sie dazu verwendet, um das Gate des Hilfsschalters V2 im Takt der Schaltfrequenz, welche durch die Pulsweitenmodulation 10 vorgegeben wird, aufzuladen. Da die Klemmspannung konstant geregelt wird, ist auch die Spannung am Gate-Anschluss des Hilfsschalters V2 weitestgehend unabhängig von der Eingangsspannung Vᵢₙ.

Die Einheit 7 zur Spitzenstromregelung weist eine Abschaltschwelle auf, welche aus der Basis-Emitter-Strecke des Bipolartransistors V16 gebildet wird. Der Strom durch den Kollektor des Bipolartransistors V8 addiert eine variable OffsetSpannung an den Widerstand R17 hinzu. Damit kann der Spitzenstrom durch den Widerstand R18, welcher zum Abschalten des Hilfsschalters führt, variiert werden. Ist die Abschaltschwelle erreicht, schaltet die Einheit 6 zur Entladung des Steueranschlusses des Hilfsschalters diesen ab. Da sich zeitgleich die Spannung an der Wicklung T1-3 des Leistungsübertragers T1 als Bestandteil der Einheit 3 zur Bereitstellung einer Versorgungsspannung von einer positiven Spannung auf 0V hinunterschwingt , bleibt das Gate von Hilfsschalter V2 angekoppelt über C12 und R11 gesperrt. Beim nächsten Einschalten des Hauptschalters V 1 schwingt die Wicklung T1-3 des Leistungsübertragers auf eine negative Spannung, welches die Sperrung des Hilfsschalters noch verstärkt.

Nach dem nächsten Ausschalten des Hauptschalters V1 schwingt die Wicklung T1-3 des Leistungsübertragers T1 in der Spannung um und lädt den Gate-Anschluss des Hilfsschalter V2 auf, um diesen durchzuschalten.

Der Ladungsspeicher C1 stellt einen Energiespeicher dar, um transiente Spannungen über dem Hauptschalter V1 aktiv zu unterdrücken. Die Zeit zwischen dem Ausschalten des Hilfsschalters V2 und dem Einschalten des Hauptschalters V1 ist ein Pufferintervall, um transiente Änderungen der Tastung, wie sie bei Lastsprüngen und bei schnellen Eingangsspannungsänderungen vorkommen, zu ermöglichen.

Die Induktivität L1 des Leistungsübertragers T1 stabilisiert die im Allgemeinen stark schwankende Hauptinduktivität T1-1 des Leistungsübertragers T1 und ermöglicht die Einstellung eines Magnetisierungsstroms. Dieser Strom lässt die Trafowicklung nach dem Ausschalten des Hauptschalters V1 zusammen mit der Streuinduktivität in die Klemmung schwingen. Beim Ausschalten des Hilfsschalters V2 bewirkt der rückgespeiste Strom, der sich auf die Induktivität L1 und die Wicklung T1-1 des Leistungsübertragers T1 aufteilt, ein selbsttätiges und nahezu verlustloses Rückschwingen der Wicklungsspannung bis zur Eingangsspannung. Der Spannungsanstieg (du/dt) wird durch die Induktivität L1 und die Wicklung T1-1 des Leistungsübertragers T1 festgelegt. Um das Umschwingen zu erreichen, kann die Induktivität L1 zu jeder Wicklung des Leistungsübertragers T1 parallel geschlossen werden.

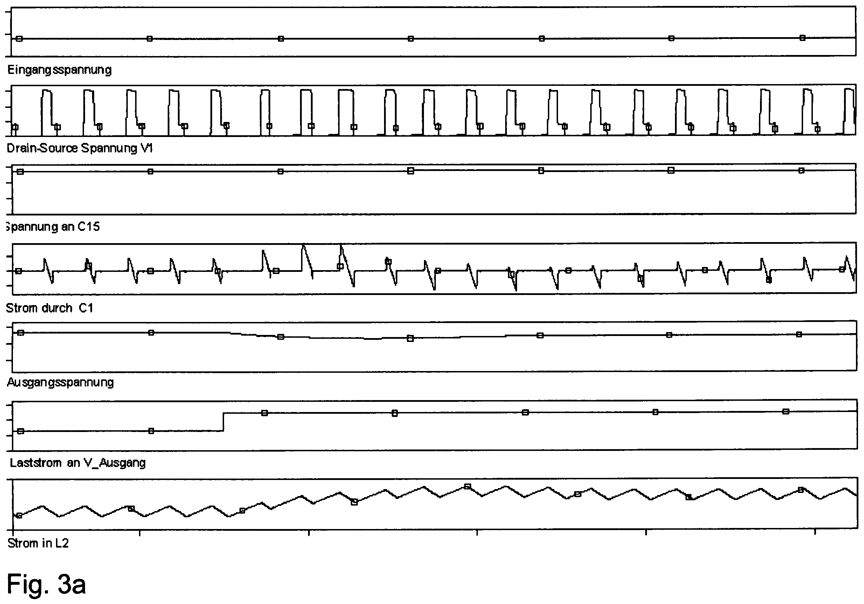

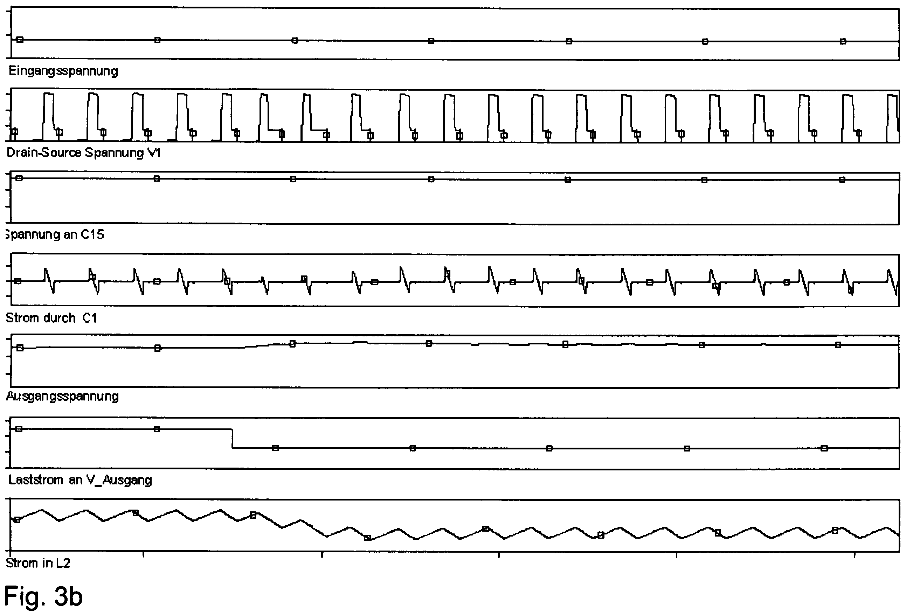

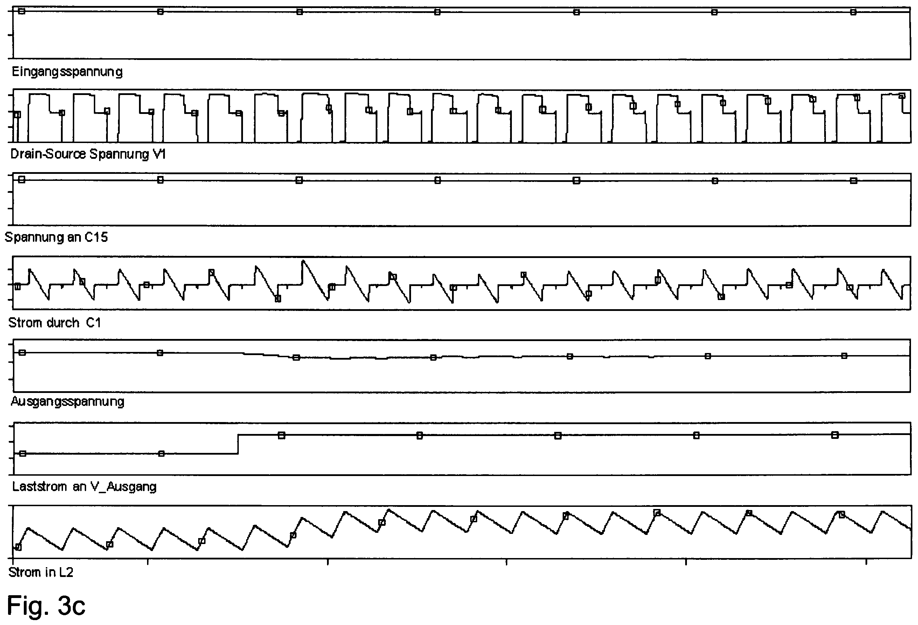

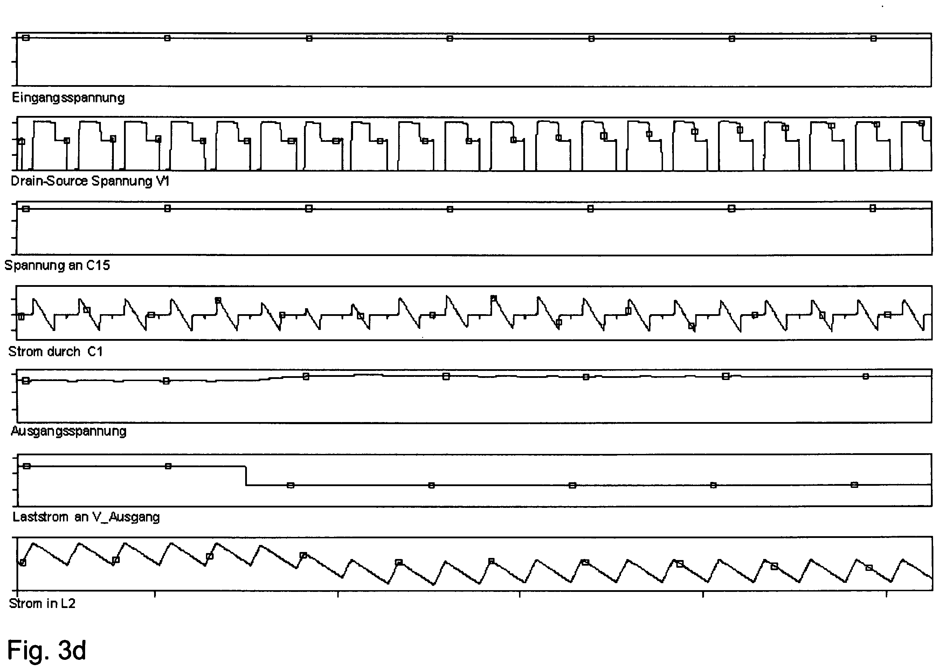

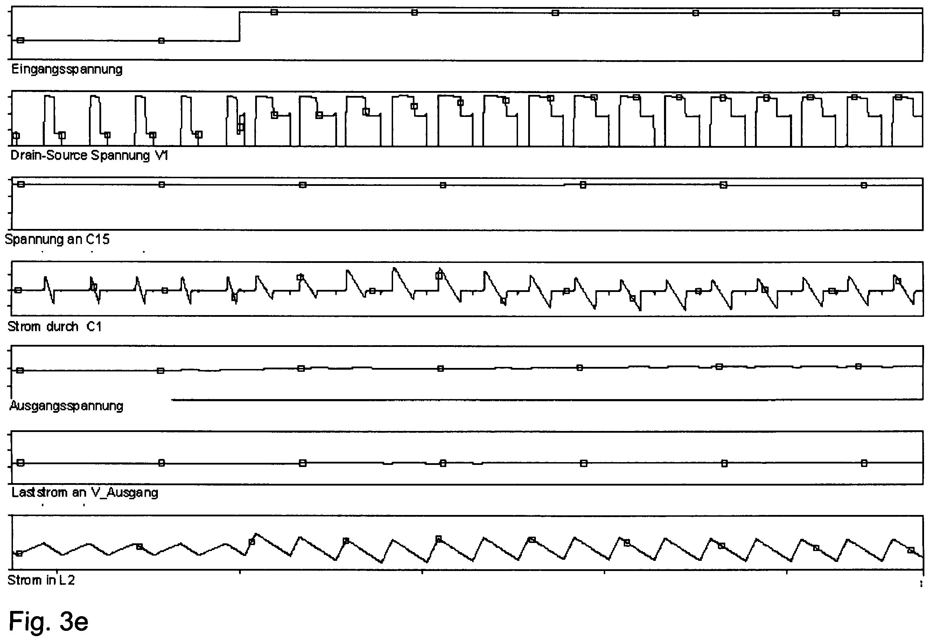

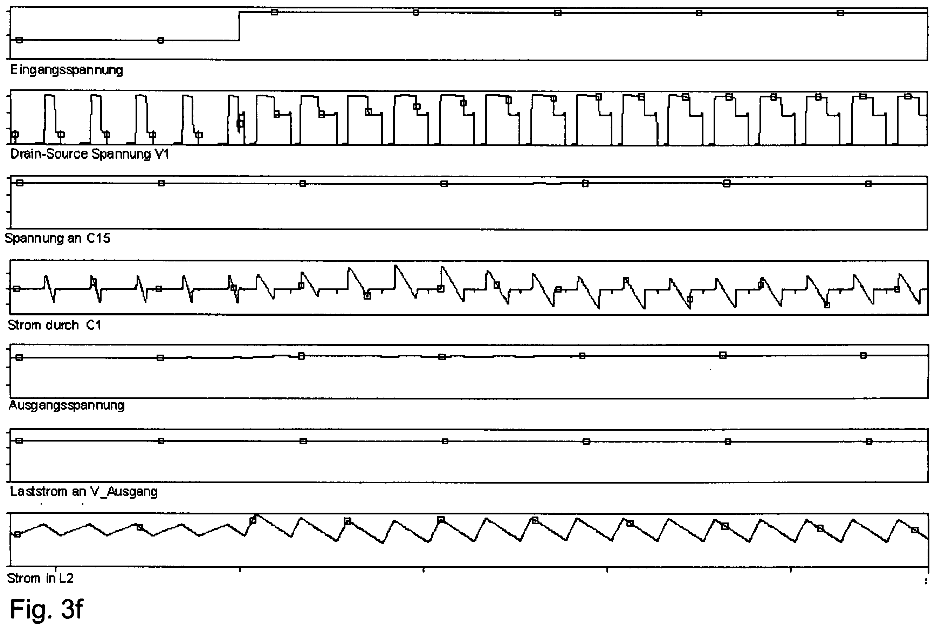

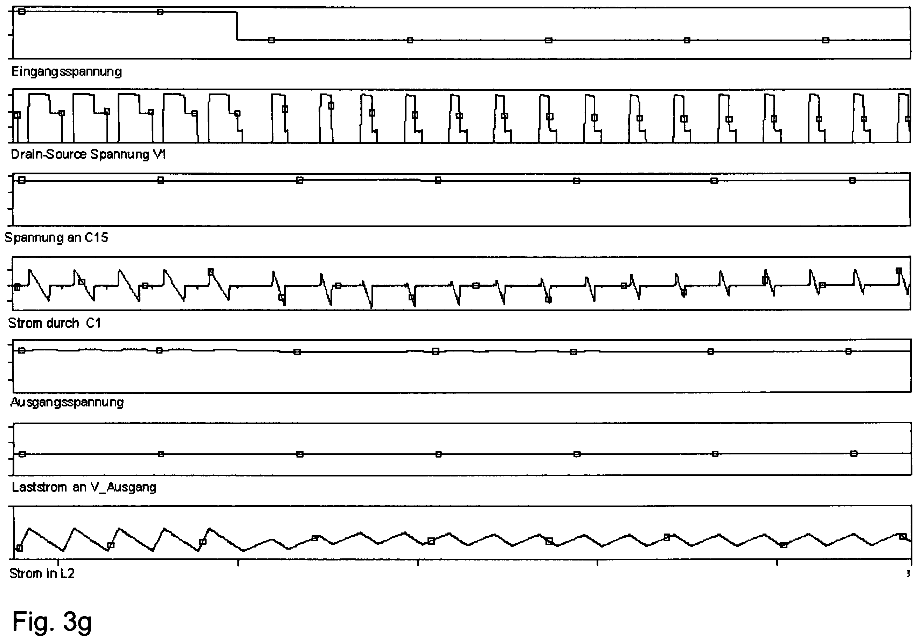

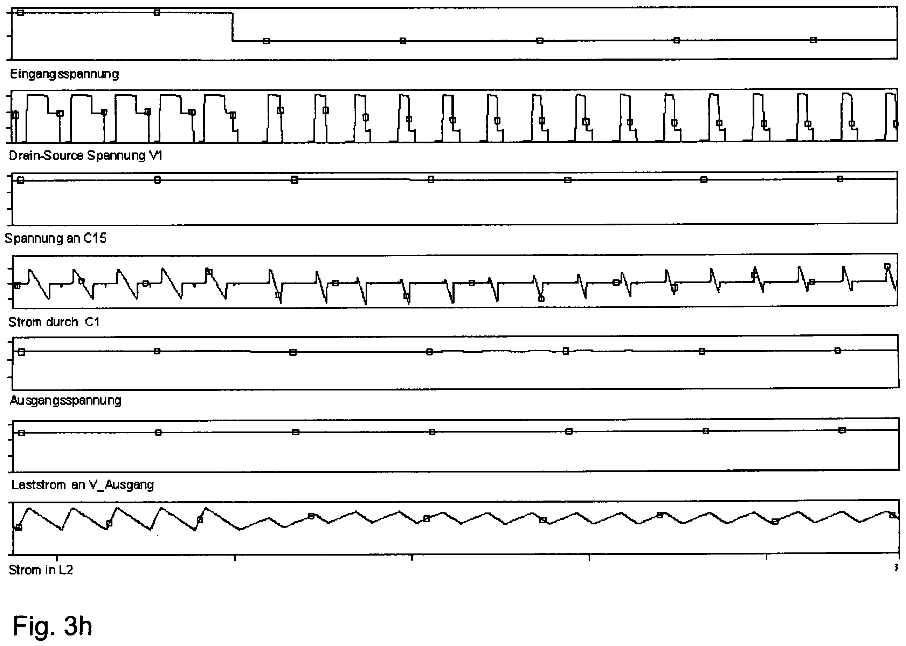

In den Figuren 3a bis 3h sind schematisch Kurvenformen der Schaltung in Bezug auf das in Fig. 2 gezeigte Ausführungsbeispiel dargestellt. Dabei sind - von oben nach unten - jeweils dargestellt: die Eingangsspannung Vᵢₙ, die Drain-Source-Spannung des Hauptschalters V1, die Spannung am Ladungsspeicher C15, der Strom durch den Ladungsspeicher C1 (Klemmkondensator), die Ausgangsspannung Vₒᵤₜ, der Laststrom am Ausgang der Anordnung und der Strom an der Induktivität L2 der Leistungsstufe.

### Bezugszeichenliste

- 1: Einheit zur Nachbildung der Klemmspannung
- 2: Einheit zur Regelung der Klemmspannung
- 3: Einheit zur Bereitstellung einer Versorgungsspannung
- 4: Einheit zur Ladung des Steueranschlusses
- 5: Einheit zur Entladung des Steueranschlusses zum Ende der Periodendauer
- 6: Einheit zur Entladung des Steueranschlusses vom Hilfsschalter
- 7: Einheit zur Spitzenstromregelung
- 8: Gate Treiber
- 9: Einheit zur galvanischen Trennung des PWM Signals
- 10: Einheit zur Pulsweiten-Modulation
- 11: Einheit zur Ansteuerung des Synchrongleichrichters
- 12: Einheit zur sekundären Regelung

- 100: Schaltungsanordnung
- 200: Leistungsstufe
- 300: Kleinsignalelektronik

- BP: Bezugspotentialanschluss

- C1: Ladungsspeicher
- C2: Ladungsspeicher
- C12: Ladungsspeicher
- C13: Ladungsspeicher
- C14: Ladungsspeicher
- C15: Ladungsspeicher
- C16: Ladungsspeicher
- C17: Ladungsspeicher
- C18: Ladungsspeicher
- C19: Ladungsspeicher

- D1: Diode

- L1: Induktivität
- L2: Induktivität

- R1: Widerstand
- R2: Widerstand
- R3: Widerstand
- R4: Widerstand
- R5: Widerstand
- R6: Widerstand
- R7: Widerstand
- R8: Widerstand
- R9: Widerstand
- R10: Widerstand
- R11: Widerstand
- R12: Widerstand
- R13: Widerstand
- R14: Widerstand
- R15: Widerstand
- R16: Widerstand
- R17: Widerstand
- R18: Widerstand
- R19: Widerstand
- R20: Widerstand

- T1: Leistungsübertrager
- T1-1: Induktivität des Leistungsübertragers T1
- T1-2: Induktivität des Leistungsübertragers T1
- T1-3: Wicklung des Leistungsübertragers T1
- T2-1: Spule
- T2-2: Spule
- T2-3: Spule

- Vᵢₙ: Eingangsspannung
- Vₒᵤₜ: Ausgangsspannung

- V1: Hauptschalter (N-Kanal MOSFET)
- V2: Hilfsschalter (N-Kanal MOSFET)
- V3: Schaltelement
- V4: Schaltelement
- V5: Bipolartransistor
- V6: Bipolartransistor
- V7: Bipolartransistor
- V8: Bipolartransistor
- V9: Diode
- V10: Diode
- V11: Diode
- V12: Diode
- V13: Bipolartransistor
- V14: Bipolartransistor
- V15: Bipolartransistor
- V16: Bipolartransistor
- V17: Diode
- V18: Diode

## Patentansprüche

1. Schaltungsanordnung (100) zur aktiven Klemmung eines Eintakt-Durchflusswandlers, wobei die Schaltungsanordnung (100) elektrisch mit einer Leistungsstufe (200) gekoppelt ist, welche einen mit einem primären Hauptschalter (V1) gekoppelten Leistungsübertrager (T1) zur Leistungsübertragung von einer Primärseite des Leistungsübertragers (T1) auf eine Sekundärseite des Leistungsübertragers (T1) umfasst, und wobei die Schaltungsanordnung (100) einen ansteuerbaren und mit der Leistungsstufe (200) gekoppelten Hilfsschalter (V2) zur Entmagnetisierung des Leistungsübertragers (T1) und einen Ladungsspeicher (C1) zur aktiven Unterdrückung transienter Spannungen über dem Hauptschalter (V1) umfasst,
wobei der Hilfsschalter (V2) im Falle seiner Ansteuerung durch die Schaltungsanordnung (100) keinen Bezug zu einem Bezugspotential der Schaltungsanordnung aufweist, und wobei die Schaltungsanordnung (100) eine Einheit (6) zur Entladung des Steueranschlusses des Hilfsschalters (V2) umfasst,
**dadurch gekennzeichnet, dass** die Schaltungsanordnung (100) eine Einheit (7) zur Spitzenstromregelung umfasst, die dazu ausgebildet ist, den Abschaltstrom im Hilfsschalter (V2) zu variieren.

2. Schaltungsanordnung nach Anspruch 1, **dadurch gekennzeichnet, dass** der Ladungsspeicher (C1) mit einem Bezugspotentialanschluss (BP) der Schaltungsanordnung (100) verbunden ist, wobei die an dem Ladungsspeicher (C1) anliegende Klemmspannung auf einen konstanten Wert, bezogen auf das Bezugspotential, geregelt wird.

3. Schaltungsanordnung nach Anspruch 1, **dadurch gekennzeichnet, dass** die Klemmspannung des Ladungsspeichers (C1) durch die Schaltungsanordnung mit einer Grenzfrequenz oberhalb eines vorgegebenen Schwellwerts nachgebildet ist.

4. Schaltungsanordnung nach einem der vorhergehenden Ansprüche, **dadurch gekennzeichnet, dass** der Hilfsschalter (V2) in Serie mit dem Hauptschalter (V1) verschaltet ist, wobei der Hauptschalter (V1) mit dem Bezugspotentialanschluss verbundenen und der Hilfsschalter (V2) mit der an dem Ladungsspeicher (C1) anliegenden Klemmspannung beaufschlagt ist.

5. Schaltungsanordnung nach einem der vorhergehenden Ansprüche, **dadurch gekennzeichnet, dass** der Hauptschalter (V1) und der Hilfsschalter (V2) steuerbare Halbleiterschaltelemente vom gleichen Leitfähigkeitstyp sind.

6. Schaltungsanordnung nach einem der vorhergehenden Ansprüche, **dadurch gekennzeichnet, dass** diese eine Einheit (1) zur Nachbildung der Klemmspannung umfasst, durch die eine gegenüber der Klemmspannung skalierte und gegenüber einer positiven Versorgungsspannung der Schaltungsanordnung referenzierte Nachbildungsspannung erzeugbar ist.

7. Schaltungsanordnung nach einem der vorhergehenden Ansprüche, **dadurch gekennzeichnet, dass** diese eine Einheit (2) zur Regelung der Klemmspannung umfasst, die dazu ausgebildet ist, die Nachbildungsspannung mit einer Referenzspannung (V9) zu vergleichen.

8. Schaltungsanordnung nach einem der vorhergehenden Ansprüche, **dadurch gekennzeichnet, dass** diese eine Einheit (3) zur Bereitstellung einer Versorgungsspannung für die Spannungsversorgung der Einheit (1) zur Nachbildung der Klemmspannung und der Einheit (2) zur Regelung der Klemmspannung umfasst.

9. Schaltungsanordnung nach Anspruch 8, **dadurch gekennzeichnet, dass** die Einheit (3) zur Bereitstellung der Versorgungsspannung mit einem Steueranschluss des Hilfsschalters (V2) zu dessen Ansteuerung gekoppelt ist.

10. Schaltungsanordnung nach einem der vorhergehenden Ansprüche, **dadurch gekennzeichnet, dass** diese eine Einheit (4) zur Ladung des Steueranschlusses des Hilfsschalters (V2) umfasst.

11. Schaltungsanordnung nach einem der vorhergehenden Ansprüche, **dadurch gekennzeichnet, dass** diese eine Einheit (5) zur Entladung des Steueranschlusses des Hilfsschalters (V2) zum Ende einer Periodendauer umfasst.

## Claims

1. A circuit arrangement (100) for actively clamping a single-ended forward converter, the circuit arrangement (100) being electrically coupled to a power stage (200) that includes a power transfer unit (T1), coupled to a primary main switch (V1), for transferring power from a primary side of the power transfer unit (T1) to a secondary side of the power transfer unit (T1), and the circuit arrangement (100) including an actuatable auxiliary switch (V2), coupled to the power stage (200), for demagnetizing the power transfer unit (T1), and a charge store (C1) for actively suppressing transient voltages via the main switch (V1),
wherein the auxiliary switch (V2), when actuated by the circuit arrangement (100), has no reference to a reference potential of the circuit arrangement, and the circuit arrangement (100) includes a unit (6) for discharging the control terminal of the auxiliary switch (V2),
**characterized in that** the circuit arrangement (100) includes a unit (7) for regulating the peak current, the unit being designed to vary the switch-off current in the auxiliary switch (V2).

2. The circuit arrangement according to Claim 1, **characterized in that** the charge store (C1) is connected to a reference potential terminal (BP) of the circuit arrangement (100), wherein the terminal voltage present at the charge store (C1) is regulated to a constant value relative to the reference potential.

3. The circuit arrangement according to Claim 1, **characterized in that** the terminal voltage of the charge store (C1) is simulated by the circuit arrangement at a limiting frequency above a predefined threshold value.

4. The circuit arrangement according to one of the preceding claims, **characterized in that** the auxiliary switch (V2) is connected in series with the main switch (V1), the main switch (V1) being connected to the reference potential terminal, and the auxiliary switch (V2) being acted on by the terminal voltage that is present at the charge store (C1).

5. The circuit arrangement according to one of the preceding claims, **characterized in that** the main switch (V1) and the auxiliary switch (V2) are controllable semiconductor switching elements of the same conductivity type.

6. The circuit arrangement according to one of the preceding claims, **characterized in that** it includes a unit (1) for simulating the terminal voltage, by means of which a simulation voltage that is scaled relative to the terminal voltage and referenced relative to a positive supply voltage of the circuit arrangement is generatable.

7. The circuit arrangement according to one of the preceding claims, **characterized in that** it includes a unit (2) for regulating the terminal voltage, the unit being designed to compare the simulation voltage to a reference voltage (V9).

8. The circuit arrangement according to one of the preceding claims, **characterized in that** it includes a unit (3) for providing a supply voltage to the power supply of the unit (1) for simulating the terminal voltage, and to the unit (2) for regulating the terminal voltage.

9. The circuit arrangement according to Claim 8, **characterized in that** the unit (3) for providing the supply voltage is coupled to a control terminal of the auxiliary switch (V2) in order to control same.

10. The circuit arrangement according to one of the preceding claims, **characterized in that** it includes a unit (4) for charging the control terminal of the auxiliary switch (V2).

11. The circuit arrangement according to one of the preceding claims, **characterized in that** it includes a unit (5) for discharging the control terminal of the auxiliary switch (V2) at the end of a period.

## Revendications

1. Circuit (100) destiné au blocage actif d'un convertisseur direct, le circuit (100) étant couplé électriquement à un étage de puissance (200) qui comporte un transformateur de puissance (T1) couplé à un commutateur principal primaire (V1) et destin à transmettre de la puissance d'un côté primaire du transformateur de puissance (TI) à un côté secondaire du transformateur de puissance (TI), et le circuit (100) comportant un commutateur auxiliaire commandable (V2), couplé à l'étage de puissance couplé (200) et destiné à la démagnétisation du transformateur de puissance (TI), et un accumulateur de charges (CI) destiné à la suppression active de tensions transitoires aux bornes du commutateur principal (V1),
le commutateur auxiliaire (V2) ne comportant, lorsqu'il activé par le circuit (100), aucun référence à un potentiel de référence du circuit, et le circuit (100) comportant une unité (6) destinée à décharger la borne de commande du commutateur auxiliaire (V2),
**caractérisé en ce que** le circuit (100) comporte une unité (7) de régulation de courant de crête qui est conçue pour faire varier le courant de coupure dans le commutateur auxiliaire (V2).

2. Circuit selon la revendication 1, **caractérisé en ce que** l'accumulateur de charges (C1) est relié à une borne de potentiel de référence (BP) du circuit (100), la tension de blocage appliqué à l'accumulateur de charges (C) étant régulée à une valeur constante par rapport au potentiel de référence.

3. Circuit selon la revendication 1, **caractérisé en ce que** la tension de blocage de l'accumulateur de charges (CI) est simulée par le circuit à une fréquence seuil supérieure à une valeur seuil prédéterminée.

4. Circuit selon l'une des revendications précédentes, **caractérisé en ce que** le commutateur auxiliaire (V2) est monté en série avec le commutateur principal (V1), le commutateur principal (V1) étant relié à la borne de potentiel de référence et le commutateur auxiliaire (V2) étant sollicité avec la tension de blocage appliquée à l'accumulateur de charges (C1).

5. Circuit selon l'une des revendications précédentes, **caractérisé en ce que** le commutateur principal (V1) et le commutateur auxiliaire (V2) sont des éléments de commutation à semi-conducteurs commandables du même type de conductivité.

6. Circuit selon l'une des revendications précédentes, **caractérisé en ce qu'**il comporte une unité (1) de simulation de la tension de blocage, laquelle unité permet de générer une tension de simulation référencée par rapport à une tension d'alimentation positive du circuit et cadrée par rapport à la tension de blocage.

7. Circuit selon l'une des revendications précédentes, **caractérisé en ce qu'**il comporte une unité (2) de régulation de la tension de blocage, laquelle unité est adaptée pour comparer la tension de simulation à une tension de référence (V9).

8. Circuit selon l'une des revendications précédentes, **caractérisé en ce qu'**il comprend une unité (3) de production d'une tension d'alimentation, laquelle unité est destinée à alimenter en tension l'unité (1) de simulation de la tension de blocage et l'unité (2) de régulation de la tension de blocage.

9. Circuit selon la revendication 8, **caractérisé en ce que** l'unité (3) de production de la tension d'alimentation est couplée à une borne de commande du commutateur auxiliaire (V2) afin de commander celui-ci.

10. Circuit selon l'une des revendications précédentes, **caractérisé en ce qu'**il comporte une unité (4) de charge de la borne de commande du commutateur auxiliaire (V2).

11. Circuit selon l'une des revendications précédentes, **caractérisé en ce qu'**il comprend une unité (5) de décharge de la borne de commande du commutateur auxiliaire (V2) en fin de période.
